# EUROPÄISCHE PATENTSCHRIFT

(11) **EP 2 788 457 B1**
(45) Veröffentlichungstag und Bekanntmachung des Hinweises auf die Patenterteilung: **22.02.2017**
(21) Anmeldenummer: 12794723.2
(22) Anmeldetag: 04.12.2012
(51) Int. Cl.: C10G 21/28, C10G 21/14, C10L 3/12, B01D 3/14

(54) **VERFAHREN ZUR DURCHFÜHRUNG EINER EXTRAKTIVDESTILLATION MIT EINEM SELEKTIVEN LÖSUNGSMITTEL, MIT EINEM GEREINIGTEN DAMPFFÖRMIGEN ROH-C4-SCHNITT ALS EINSATZSTROM**
METHOD FOR PERFORMING AN EXTRACTIVE DISTILLATION USING A SELECTIVE SOLVENT WITH A VAPOROUS C4 FRACTION AS A FEED STREAM
PROCÉDÉ DE DISTILLATION EXTRACTIVE AU MOYEN D'UN SOLVANT SÉLECTIF UTILISANT UNE FRACTION C4 BRUTE PURIFIÉE SOUS FORME DE VAPEUR EN TANT QUE FLUX DE DÉPART

(30) Priorität: 05.12.2011 EP 11191932
(43) Veröffentlichungstag der Anmeldung: 15.10.2014
(73) Patentinhaber: BASF SE, 67056 Ludwigshafen am Rhein (DE)
(72) Erfinder: HEIDA, Bernd, 67158 Ellerstadt (DE); HUGO, Randolf, 67246 Dirmstein (DE)
(86) Internationale Anmeldenummer: PCT/EP2012/074294
(87) Internationale Veröffentlichungsnummer: WO 2013/083536

(56) Entgegenhaltungen:
- EP-A1- 0 945 415
- DE-A1-102010 011 014
- US-A- 2 877 173
- US-A- 3 763 022

## Beschreibung

Die Erfindung betrifft ein Verfahren zur Bereitstellung eines dampfförmigen gereinigten Roh-C₄-Schnittes als Einsatzstrom für eine Extraktivdestillation mit einem selektiven Lösungsmittel.

Der Begriff C₄-Schnitt bezeichnet Gemische von Kohlenwasserstoffen mit überwiegend 4 Kohlenstoffatomen pro Molekül. C₄-Schnitte werden beispielsweise bei der Herstellung von Ethylen und/oder Propylen durch thermisches Spalten, üblicherweise in Steamcrackern, insbesondere Naphtha-Crackern oder FCC-Crackern (Fluidized Catalytic Cracking) einer Petroleumfraktion, wie verflüssigtes Petroleumgas, Leichtbenzin oder Gasöl, erhalten. Weiterhin werden C₄-Schnitte bei der katalytischen Dehydrierung von n-Butan und/oder n-Buten erhalten. C₄Schnitte enthalten in der Regel Butane, Butene, 1,3-Butadien, kleine Mengen an C₃- und C₄-Acetylenen, 1,2-Butadien und C₅₊-Kohlenwasserstoffe.

Die Auftrennung von C₄-Schnitten ist wegen der geringen Unterschiede in den relativen Flüchtigkeiten der Komponenten ein kompliziertes destillationstechnisches Problem. Daher wird die Auftrennung durch eine sogenannte Extraktivdestillation durchgeführt, d.h. eine Destillation unter Zugabe eines selektiven Lösungsmittels (auch als Extraktionsmittel bezeichnet), das einen höheren Siedepunkt als das aufzutrennende Gemisch aufweist und das die Unterschiede in den relativen Flüchtigkeiten der aufzutrennenden Komponenten erhöht.

Es sind eine Vielzahl von Verfahren zur Auftrennung von C₄-Schnitten mittels Extraktivdestillation unter Verwendung von selektiven Lösungsmitteln bekannt. Ihnen ist gemeinsam, dass sich durch Gegenstromführung des aufzutrennenden C₄-Schnittes in Dampfform mit dem flüssigen selektiven Lösungsmittel bei geeigneten thermodynamischen Bedingungen, in der Regel bei niedrigen Temperaturen, häufig im Bereich von 20 bis 80 °C und bei moderaten Drücken, häufig bei Normaldruck bis 6 bar, das selektive Lösungsmittel mit den Komponenten aus dem C₄-Schnitt belädt, zu denen es eine höhere Affinität hat, wogegen die Komponenten, zu denen das selektive Lösungsmittel eine geringere Affinität hat, in der Dampfphase verbleiben und als Kopfstrom abgezogen werden. Aus dem beladenen Lösungsmittelstrom werden anschließend unter geeigneten thermodynamischen Bedingungen, d.h. bei höherer Temperatur und/oder niedrigerem Druck gegenüber dem ersten Verfahrensschritt, in einem oder mehreren weiteren Verfahrensschritten die Komponenten fraktioniert aus dem selektiven Lösungsmittel freigesetzt.

Roh-C₄-Schnitte enthalten Verunreinigungen, die in der Extraktivdestillation zu Problemen führen würden, insbesondere Schaumbildung des Lösungsmittels und Apparate-Fouling, so dass diese eben vor der Zuführung des Roh-C₄-Schnittes zur Extraktivdestillation abgetrennt werden müssen, um einen zuverlässigen Betrieb der Extraktivdestillation sicherzustellen.

Verunreinigungen, die zu den obigen Problemen führen, sind insbesondere gegenüber 1,3-Butadien höher siedende Komponenten, darunter besonders C₅₊-Kohlenwasserstoffe (überwiegend Kohlenwasserstoffe mit 5 oder mehr Kohlenstoffatomen pro Molekül, Isopren, C₄-Oligomere und -Polymere, d.h. Oligomere und gegebenenfalls Polymere des Butadiens mit der Formel (C₄H₆)ₙ, wobei n größer oder gleich 2 ist. Der Anteil der C₅₊-Kohlenwasserstoffe in C₄-Schnitten ist insbesondere abhängig von den Betriebsbedingungen beim thermischen Spalten und beträgt bis zu 1000 Gew.-ppm oder auch bis zu 5000 Gew.-ppm, im Einzelfall bis zu 1 Gew.-%, bezogen auf das Gesamtgewicht des Roh-C₄-Schnittes. Die C₄-Oligomere und -Polymere bilden sich insbesondere durch Lagerung und Transport; ihr Anteil ist daher überwiegend von den Lager- und Transportbedingungen abhängig, insbesondere Temperatur, Dauer, Inertisierungsgrad der Atmosphäre unter der die Lagerung und/oder der Transport stattfindet.

Darüber hinaus können auch C₃-Kohlenwasserstoffe, d.h. Kohlenwasserstoffe mit drei Kohlenstoffatomen pro Molekül, der Extraktivdestillation zu Problemen führen; hierbei handelt es sich insbesondere um Methylacetylen, das eine ähnliche Affinität zu den üblicherweise eingesetzten selektiven Lösungsmitteln wie 1,3-Butadien aufweist. Der Anteil der C₃-Kohlenwasserstoffe soll daher im Feedstrom zur Extraktivdestillation auf maximal 50 Gew.-ppm, bezogen auf das Gesamtgewicht des Feedstroms, begrenzt werden.

Die obigen Aufgaben zur Vorreinigung des Feedstroms zur Extraktivdestillation von Roh-C₄-Schnitten werden bislang in unterschiedlicher Weise gelöst: nach einer bekannten Fahrweise werden in einer der Extraktivdestillation vorgeschalteten Destillationskolonne werden C₃-Kohlenwasserstoffe über Kopf abgetrennt und die übrigen Komponenten über Sumpf abgezogen. Der Sumpfstrom wird anschließend zwecks Abtrennung der gegenüber 1,3-Butadien hochsiedenden Komponenten dem Verdampferkessel zugeführt, d.h. einem Apparat mit einer einzigen Trennstufe. Im Verdampferkessel wird der mit C₃-Komponenten abgereicherte Roh-C₄-Strom nahezu vollständig verdampft, und zwar mengenstromgeregelt, so dass die gegenüber 1,3-Butadien hochsiedenden Komponenten im verbleibenden flüssigen Anteil nicht über 5 Gew.-%, insbesondere nicht über 1 Gew.-%, oder auch nicht über 0,1 Gew.-%, bezogen auf das Gesamtgewicht des dem Verdampferkessel zugeführten Roh-C₄-Schnittes liegen. Der im Verdampferkessel verbleibende Flüssigkeitsstrom wird als Purge-Strom ausgeschleust. Nachteilig ist hierbei jedoch, dass über den Purgestrom zusammen mit den Hochsiedern hohe Anteile an Wertstoffen, C₄-Kohlenwasserstoffe, mit ausgeschleust werden.

Es war demgegenüber Aufgabe der Erfindung, ein Verfahren zur Verfügung zu stellen, wonach die in der Extraktivdestillation störenden Nebenkomponenten zu Roh-C₄-Schnitten in technisch einfacher Weise, mit niedrigen Investitions- und Energiekosten abgetrennt werden können, wodurch die Standzeit der Extraktivdestillationskolonne erhöht wird.

Diese Aufgabe wird gelöst durch ein Verfahren gemäß Anspruch 1.

Ein typischer Roh-C₄-Schnitt aus einem Naphtha Cracker weist die folgende Zusammensetzung in Gewichtsprozenten auf:

| | |
|---|---|
| Propan | 0 - 0,5 |
| Propen | 0 - 0,5 |
| Propadien | 0 - 0,5 |
| Propin | 0 - 0,5 |
| n-Butan | 3 - 10 |
| i-Butan | 1 - 3 |
| 1-Buten | 10 - 20 |
| i-Buten | 10 - 30 |
| trans-2-Buten | 2 - 8 |
| cis-2-Buten | 2 - 6 |
| 1,3-Butadien | 35 - 65 |
| 1,2-Butadien | 0,1 - 1 |
| Ethylacetylen | 0,1 - 2 |
| Vinylacetylen | 0,1 - 3 |
| C5 | 0 - 0,5 |

Roh-C₄-Schnitte aus Naphtha-Crackern enthalten somit überwiegend Butane, Butene und 1,3-Butadien. Darüber hinaus sind geringe Mengen an sonstigen Kohlenwasserstoffen enthalten. C₄-Acetylene sind häufig bis zu einem Anteil von 5 Gew.-% oder auch bis zu 2 Gew.-% enthalten.

Für die eingangs bereits definierte Extraktivdestillation kommen als selektive Lösungsmittel generell Substanzen oder Gemische in Frage, die einen höheren Siedepunkt als das aufzutrennende Gemisch sowie eine größere Affinität zu konjugierten Doppelbindungen und Dreifachbindungen als zu einfachen Doppelbindungen sowie Einfachbindungen aufweisen, bevorzugt dipolare, besonders bevorzugt dipolar-aprotische Lösungsmittel. Aus apparatetechnischen Gründen werden wenig oder nicht korrosive Substanzen bevorzugt.

Geeignete selektive Lösungsmittel für das erfindungsgemäße Verfahren sind zum Beispiel Butyrolacton, Nitrile wie Acetonitril Propionitril, Methoxypropionitril, Ketone wie Aceton, Furfurol, N-alkylsubstituierte niedere aliphatische Säureamide, wie Dimethylformamid, Diethylformamid, Dimethylacetamid, Diethylacetamid, N-Formylmorpholin, N-alkylsubstituierte cyclische Säureamide (Lactame) wie N-Alkylpyrrolidone, insbesondere N-Methylpyrrolidon. Im Allgemeinen werden N-alkylsubstituierte niedere aliphatische Säureamide oder N-alkylsubstituierte cyclische Säureamide verwendet. Besonders vorteilhaft sind Dimethylformamid, Acetonitril, Furfurol und insbesondere N-Methylpyrrolidon.

Es können jedoch auch Mischungen dieser Lösungsmittel untereinander, zum Beispiel von N-Methylpyrrolidon mit Acetonitril, Mischungen dieser Lösungsmittel mit Colösungsmitteln wie Wasser und/oder tert.-Butylether, zum Beispiel Methyl-tert.-butylether, Ethyl-tert.-butylether, Propyl-tert.-butylether, n- oder iso-Butyl-tert.-butylether eingesetzt werden.

Besonders geeignet ist N-Methylpyrrolidon, bevorzugt in wässriger Lösung, insbesondere mit 8 bis 10 Gew.-% Wasser, besonders bevorzugt mit 8,3 Gew.-% Wasser.

Um Probleme in der Extraktivdestillation zu vermeiden, soll derselben als Einsatzstrom ein dampfförmiger gereinigter Roh-C₄-Schnitt zugeführt werden, der weniger als als 50 Gew.-ppm C₃-Kohlenwasserstoffe, bezogen auf das Gesamtgewicht des gereinigten dampfförmigen Roh-C₄-Schnittes, weniger als zwei Drittel der im Feedstrom enthaltenden C₅₊-Kohlenwasserstoffe und weniger als 5 Gew.-% der im Feedstrom enthaltenen C₄-Oligomere und -Polymere enthält.

Es wurde gefunden, dass es möglich ist, die Verfahrensschritte
1) Abtrennung der C₃-Kohlenwasserstoffe und
2) Abtrennung der C₄-Oligomere und -Polymere sowie der C₅₊-Kohlenwasserstoffe, jeweils bis auf die vorstehend für den dampfförmigen gereinigten Roh-C₄-Schnitt angegebenen Restgehalte, und
3) Verdampfen des flüssigen Roh-C₄-Schnittes,
in einer einzigen Destillationskolonne durchzuführen, die einen Verstärkungsteil und einen Abtriebsteil aufweist. Aus derselben werden die C₃-Komponenten über Kopf, die C₄-Oligomere und -Polymere sowie die C₅-Kohlenwasserstoffe über Sumpf und der gereinigte gasförmige Roh-C₄-Schnitt als Seitenstrom aus dem Abtriebsteil abgezogen.

Gegenüber bekannten Verfahren können somit nach dem erfindungsgemäßen Verfahren auf relativ einfache Weise, in einer einzigen Destillationskolonne, sämtliche zur Aufbereitung von Roh-C₄-Schnitten vor der Zuführung derselben zur Extraktivdestillation erforderlichen Verfahrensschritte in einer einzigen Destillationskolonne durchgeführt werden, mit entsprechenden Einsparungen von Investions- und Energiekosten.

Darüber hinaus ist im erfindungsgemäßen Verfahren die Abtrennung von gegenüber 1,3-Butadien hochsiedenden Komponenten im C₄-Schnitt mit wesentlich weniger Verlust an Wertprodukt, den C₄-Kohlenwasserstoffen, möglich. Über Ausschleusung eines flüssigen Purge-Stromes aus dem Verdampferkessel kann der Sumpfstrom der Destillationskolonne grundsätzlich unbegrenzt aufkonzentriert werden. Aus praktischen Überlegungen, insbesondere aus Gründen der Wärmeintegration, wird die Aufkonzentrierung des Sumpfstromes häufig in der Weise limitiert, dass dieser noch ca. 50 Gew.-% C₄-Komponenten enthält, d.h. die Sumpftemperatur in der Destillationskolonne sollte nicht zu hoch sein, damit zur Aufheizung Abwärme aus Prozessströmen, beispielsweise Abwärme des selektiven Lösungsmittels vor der Recyclierung desselben zur Extraktivdestillation effektiver genutzt werden kann.

Bevorzugt werden die C₃-Kohlenwasserstoffe im dampfförmigen gereinigten Roh-C₄-Schnitt auf weniger als 10 Gew.-ppm, bezogen auf das Gesamtgewicht des dampfförmigen gereinigten Roh-C₄-Schnittes, oder auch auf weniger als 4 Gew.-ppm abgereichert.

Weiter bevorzugt werden die C₅₊-Kohlenwasserstoffe im dampfförmigen gereinigten Roh-C₄-Schnitt auf weniger als die Hälfte der im Feedstrom enthaltenen C₅₊-Kohlenwasserstoffe abgereichert.

Die Destillationskolonne wird bevorzugt bei einem Kopfdruck im Bereich von 4 bis 10 bar absolut, weiter bevorzugt bei einem Kopfdruck im Bereich von 6 bis 7 bar absolut betrieben.

Die Destillationskolonne ist bevorzugt eine Bodenkolonne.

Die Bodenkolonne weist insbesondere 30 bis 100 praktische Böden oder besonders bevorzugt 50 bis 70 praktische Böden auf.

Die Erfindung wird im Folgenden mit einer Zeichnung sowie von Ausführungsbeispielen näher erläutert.

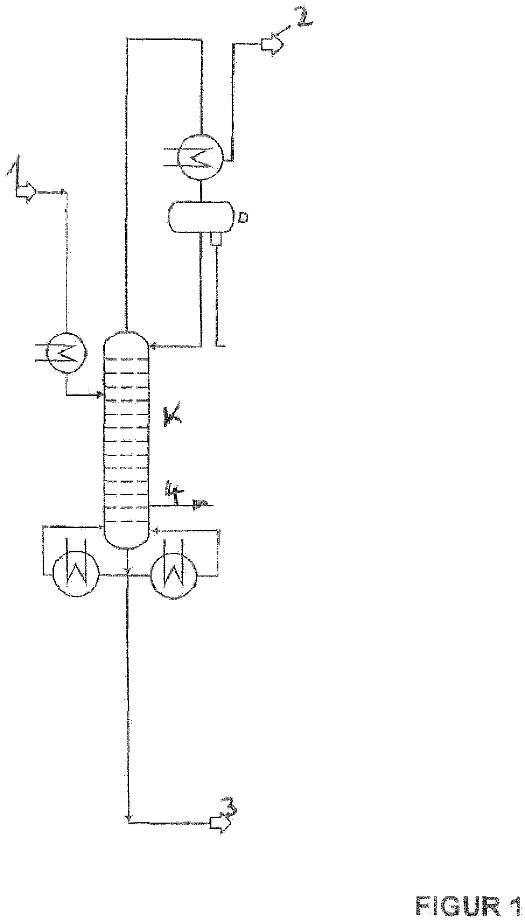

Die einzige Figur 1 zeigt eine Destillationskolonne K, der im oberen Drittel derselben ein flüssiger Roh-C₄-Schnitt als Feedstrom 1 zugeführt wird, aus der ein Kopfstrom 2, enthaltend die C₃-Kohlenwasserstoffe, ein Sumpfstrom 3, enthaltend gegenüber 1,3-Butadien hochsiedende Komponenten, sowie ein dampfförmiger Seitenabzugstrom 4, aus dem Abtriebsteil der Destillationskolonne K abgezogen wird, der der Extraktivdestillation zugeführt wird.

Ausgegangen wird von einem flüssigen Roh-C₄-Schnitt als Feedstrom für eine 100 kt/a-Anlage, enthaltend 200 ppm Propan, 400 ppm Propen, 300 ppm Propadien, 400 ppm Propin, 2,0 % n-Butan, 6,0 % iso-Butan, 19,0 % n-Buten, 28,3 % iso-Buten, 5,5 % trans-2-Buten, 4,4 % cis-2-Buten, 39,0 % Butadien-1,3, 0,2 % Butadien-1,2, 1200 ppm Butin-1, 4500 ppm Vinylacetylen und je 1000 ppm iso-Pentan, 3-Methylbuten-1 und 2-Methylbuten-2, jeweils bezogen auf das Gesamtgewicht des Feedstromes. C₄-Oligomere und Polymere können je nach Lager und Transportbedingungen im %-Bereich enthalten sein. Um in einer Extraktivdestillation als Feedstrom eingesetzt werden zu können, wird der obige Roh-C₄-Schnitt einer Vorreinigung unterworfen, zum Vergleich in einer Anlage mit einer Destillationskolonne, in der die C₃-Kohlenwasserstoffe über Kopf abtrennt und die übrigen Komponenten über Sumpf abgezogen werden, worauf der Sumpfstrom zwecks Abtrennung der gegenüber 1,3-Butadien hochsiedenden Komponenten einem Verdampferkessel zugeführt wird, d. h. einem Apparat mit einer einzigen Trennstufe. Im Verdampferkessel wird der an C₃-Komponenten abgereicherte Roh-C₄-Strom nahezu vollständig verdampft, und Mengenstrom geregelt, ausgeschleust, so dass die gegenüber 1,3-Butadien hochsiedenden C₅-Komponenten im verbleibenden flüssigen Anteil nicht über 5 Gew.-%, bezogen auf das Gesamtgewichts dem Verdampferkessel zugegeführten Roh-C₄-Schnittes, liegen, um den Verlust an C₄-Komponenten im flüssigen Rückstand klein zu halten. Der Anteil der im flüssigen Rückstand enthaltenen Oligomere und Polymere ist wegen des geringeren Dampfdruckes deutlich größer. Der im Verdampferkessel verbleibende Flüssigkeitsstrom wird als Purge-Strom ausgeschleust.

Nach dem erfindungsgemäßen Beispiel wird derselbe Roh-C₄-Schnitt als Feedstrom einer einzigen Destillationskolonne zugeführt, aus der ein die Kohlenwasserstoffe enthaltender Kopfstrom abgezogen wird, ein C₄-Oligomere und -Polymere sowie die C₅₊-Kohlenwasserstoffe enthaltende Sumpfstrom sowie ein dampfförmiger Seitenstrom, enthaltend gereinigten Roh-C₄-Schnitt.

Der gereinigte Roh-C₄-Schnitt entspricht in beiden Fällen (Vergleichsbeispiel sowie erfindungsgemäßes Beispiel) den im Anspruch definierten Spezifikationsanforderungen hinsichtlich der C₃-Komponenten, d.h. er enthält jeweils weniger als 50 Gew.-ppm C₃-Kohlenwasserstoffe, bezogen auf das Gesamtgewicht des gereinigten dampfförmigen Roh-C₄-Schnittes. Gemäß dem Stand der Technik werden weniger als 5% der im C4-Schnitt enthaltenen C₅-Komponenten im Rückstandsstrom (=Purgestrom) abgetrennt, während im erfindungsgemäßen Verfahren mehr als ein Drittel der im Feedstrom enthaltenden C₅₊-Kohlenwasserstoffe und mehr als 95 Gew.-% der im Feedstrom enthaltenen C₄-Oligomere und -Polymere über Sumpf im Rückstandsstrom ausgeschleust werden.

Der Rückstandsstrom (aus dem Verdampferkessel) beträgt nach dem Stand der Technik 160 kg/h, mit einem Anteil von 1,3-Butadien von 38,6 Gew.-%.

Dem gegenüber betrug der Rückstandsstrom (Sumpfstrom) aus der Destillationskolonne nach dem erfindungsgemäßen Verfahren 183 kg/h, mit 20 Gew.-% 1,3-Butadien. Die Ausbeute an 1,3-Butadien in der Vordestillation (Butadien-1,3 im gereinigten C₄-Schnitt bezogen auf Butadien-1,3 im rohen C₄-Schnitt) betrug nach dem Stand der Technik 99,29 %, gegenüber 99,49 % nach dem erfindungsgemäßen Beispiel.

Als weiterer Vorteil wird nach dem erfindungsgemäßen Verfahren ein gereinigter Roh-C₄-Schnitt mit höherem Reinheitsgrad, gegenüber dem Verfahren nach dem Stand der Technik abgetrennt. Bei 32 t/h Roh-C₄ Feed mit insgesamt 3000 ppm wt. C₅-Komponenten (hinzu können weitere Anteile an C₆-Komponenten sowie Oligomere und Polymere kommen, die hier nicht berücksichtigt sind) werden 96 kg/h C₅-Komponenten gemäß Stand der Technik der Extraktivdestillation zugefahren. Im Erfindungsgemäßen Fall werden nur 41 kg/h C₅-Komponenten der Extraktivdestillation zugefahren. Da weniger C₅-Komponenten aus der Vordestillation der Extraktivdestillation zugeführt werden, verringert sich auch in der Extraktivdestillation bzw. der anschließenden Reindstillation der Verlust an Butadien-1,3. Bezogen auf das Reinprodukt aus der gesamten Extraktivdestillation inklusive Vordestillation beträgt die Ausbeute an Butadien-1,3 (ger. 100 %) gemäß Stand der Technik 96,47 % und im erfindungsgemäßen Fall 96,69 %.

In einer oben angegebenen Großanlage mit 100 kt/a ist der Verlust an Wertprodukt 1,3-Butadien somit um ca. 218 t/a im Verfahren gemäß Stand der Technik größer als im erfindungsgemäßen Verfahren.

Indem das Lösungsmittel einen geschlossenen Kreislauf bildet, wird durch die vorherige Abtrennung störender Komponenten und Verunreinigungen dasselbe sauber gehalten, wodurch der Regenerieraufwand klein gehalten wird. Gleichzeitig werden die Verschmutzung der Extraktivdestillationsanlage (Fouling der Betten in den Kolonnen) sowie die Schaumbildung niedrig gehalten. Dadurch ist weniger Antischaummittel erforderlich mit entsprechend niedrigeren Kosten. Vermindertes Fouling vermindert den Reinigungsaufwand bei einer Abstellung. Jede Abstellung bedeutet einen Produktionsausfall von für ca. 2 Wochen; dazu addiert sich der Reinigungsaufwand. Dies führt zu Kosten im 7-stelligen Bereich.

## Patentansprüche

1. Verfahren zur Durchführung einer Extraktivdestillation mit einem selektiven Lösungsmittel, mit einem gereinigten dampfförmigen Roh-C₄-Schnitt als Einsatzstrom, wobei der gereinigte dampfförmige Roh-C₄-Schnitt,
ausgehend von einem flüssigen Roh-C₄-Schnitt als Feedstrom, enthaltend neben Butanen, Butenen und 1,3-Butadien C₃-Kohlenwasserstoffe, C₄-Oligomere und -Polymere, sowie C₅₊-Kohlenwasserstoffe, in einem Verfahren mit den Verfahrensschritten
1) Abtrennung der C₃-Kohlenwasserstoffe,
2) Abtrennung der C₄-Oligomere und -Polymere sowie der C₅₊-Kohlenwasserstoffe, jeweils bis auf die vorstehend für den dampfförmigen gereinigten Roh-C₄-Schnitt angegebenen Restgehalte, und
3) Verdampfen des flüssigen Roh-C₄-Schnittes,
erhalten wird und wobei der gereinigte dampfförmige Roh-C₄-Schnitt
- weniger als 50 Gew.-ppm C₃-Kohlenwasserstoffe, bezogen auf das Gesamtgewicht des gereinigten dampfförmigen Roh-C₄-Schnittes,
- weniger als zwei Drittel der im Feedstrom enthaltenden C₅₊-Kohlenwasserstoffe und
- weniger als 5 Gew.-% der im Feedstrom enthaltenen C₄-Oligomere und -Polymere enthält,
**dadurch gekennzeichnet, dass**
sämtliche Verfahrensschritte 1), 2) und 3) in einer einzigen Destillationskolonne durchgeführt werden,
der der flüssige Roh-C₄-Schnitt im oberen Drittel derselben, unter Ausbildung eines Verstärkungs- und eines Abtriebsteils zugeführt werden und aus der ein die C₃-Kohlenwasserstoffe enthaltender Kopfstrom, ein die C₄-Oligomere und - Polymere sowie die C₅₊-Kohlenwasserstoffe enthaltender Sumpfstrom und aus dem Abtriebsteil der dampfförmige gereinigte Roh-C₄-Schnitt als Seitenstrom abgezogen wird.

2. Verfahren nach Anspruch 1, **dadurch gekennzeichnet, dass** die C₃-Kohlenwasserstoffe im dampfförmigen gereinigten Roh-C₄-Schnitt auf weniger als 10 Gew.-ppm, bezogen auf das Gesamtgewicht des dampfförmigen gereinigten Roh-C₄-Schnittes, abgereichert werden.

3. Verfahren nach Anspruch 2, **dadurch gekennzeichnet, dass** die C₃-Kohlenwasserstoffe im dampfförmigen gereinigten Roh-C₄-Schnitt auf weniger als 4 Gew.-ppm, bezogen auf das Gesamtgewicht des dampfförmigen gereinigten Roh-C₄-Schnittes, abgereichert werden.

4. Verfahren nach einem der Ansprüche 1 bis 3, **dadurch gekennzeichnet, dass** die C₅₊-Kohlenwasserstoffe im dampfförmigen gereinigten Roh-C₄-Schnitt auf weniger als die Hälfte der im Feedstrom enthaltenen C₅₊-Kohlenwasserstoffe abgereichert werden.

5. Verfahren nach einem der Ansprüche 1 bis 4, **dadurch gekennzeichnet, dass** die Destillationskolonne bei einem Kopfdruck im Bereich von 4 bis 10 bar absolut, betrieben wird.

6. Verfahren nach Anspruch 5, **dadurch gekennzeichnet, dass** die Destillationskolonne bei einem Kopfdruck im Bereich von 6 bis 7 bar absolut betrieben wird.

7. Verfahren nach einem der Ansprüche 1 bis 6, **dadurch gekennzeichnet, dass** die Destillationskolonne eine Bodenkolonne ist.

8. Verfahren nach Anspruch 7, **dadurch gekennzeichnet, dass** die Bodenkolonne 30 bis 100 praktische Böden aufweist.

9. Verfahren nach Anspruch 8, **dadurch gekennzeichnet, dass** die Destillationskolonne 50 bis 70 praktische Böden aufweist.

## Claims

1. A process for conducting an extractive distillation with a selective solvent, with a purified vaporous crude C₄ cut as feed stream, said purified vaporous crude C₄ cut being obtained proceeding from a liquid crude C₄ cut as a feed stream, comprising not only butanes, butenes and 1,3-butadiene but also C₃ hydrocarbons, C₄ oligomers and polymers, and C₅₊ hydrocarbons, in a process comprising the process steps of
1) removing the C3 hydrocarbons,
2) removing the C4 oligomers and polymers and the C5+ hydrocarbons, in each case down to the residual contents specified above for the vaporous purified crude C4 cut, and
3) vaporizing the liquid crude C4 cut,
and said purified vaporous crude C₄ cut comprising
- less than 50 ppm by weight of C₃ hydrocarbons, based on the total weight of the purified vaporous crude C₄ cut,
- less than two thirds of the C₅₊ hydrocarbons present in the feed stream and
- less than 5% by weight of the C₄ oligomers and polymers present in the feed stream,
wherein
all process steps 1), 2), and 3) are performed in a single distillation column,
to which the liquid crude C₄ cut is supplied in the upper third thereof, forming a rectifying section and a stripping section, and from which a top stream comprising the C₃ hydrocarbons, a bottom stream comprising the C₄ oligomers and polymers and the C₅₊ hydrocarbons, and, from the stripping section, the vaporous purified crude C₄ cut as a sidestream are drawn off.

2. The process according to claim 1, wherein the C₃ hydrocarbons are depleted in the vaporous purified crude C₄ cut to less than 10 ppm by weight, based on the total weight of the vaporous purified crude C₄ cut.

3. The process according to claim 2, wherein the C₃ hydrocarbons in the vaporous purified crude C₄ cut are depleted to less than 4 ppm by weight, based on the total weight of the vaporous purified crude C₄ cut.

4. The process according to any of claims 1 to 3, wherein the C₅₊ hydrocarbons in the vaporous purified crude C₄ cut are depleted to less than half of the C₅₊ hydrocarbons present in the feed stream.

5. The process according to any of claims 1 to 4, wherein the distillation column is operated at a top pressure in the range from 4 to 10 bar absolute.

6. The process according to claim 5, wherein the distillation column is operated at a top pressure in the range from 6 to 7 bar absolute.

7. The process according to any of claims 1 to 6, wherein the distillation column is a plate column.

8. The process according to claim 7, wherein the plate column has 30 to 100 actual plates.

9. The process according to claim 8, wherein the distillation column has 50 to 70 actual plates.

## Revendications

1. Procédé pour réaliser une distillation extractive à l'aide d'un solvant sélectif, avec une fraction brute, purifiée, sous forme vapeur, en C₄ comme flux de départ, la fraction brute, purifiée, sous forme vapeur, en C₄ étant obtenue, partant d'une fraction brute liquide en C₄ comme flux d'alimentation, contenant, outre des butanes, des butènes et du 1,3-butadiène, des hydrocarbures en C₃, des oligomères et des polymères en C₄ ainsi que des hydrocarbures en C₅₊, dans un procédé présentant les étapes de procédé
1) séparation des hydrocarbures en C₃,
2) séparation des oligomères et des polymères en C₄ ainsi que des hydrocarbures en C₅₊, à chaque fois jusqu'aux teneurs résiduelles indiquées précédemment pour la fraction brute, purifiée, sous forme vapeur, en C₄ et
3) évaporation de la fraction brute liquide en C₄,
et la fraction brute, purifiée, sous forme vapeur en C₄ contenant
- moins de 50 ppm en poids d'hydrocarbures en C₃, par rapport au poids total de la fraction brute, purifiée, sous forme vapeur, en C₄,
- moins de deux tiers des hydrocarbures en C₅₊ contenus dans le flux d'alimentation et
- moins de 5% en poids des oligomères et polymères en C₄ contenus dans le flux d'alimentation,
**caractérisé en ce que** l'ensemble des étapes de procédé 1), 2) et 3) sont réalisées dans une seule colonne de distillation, qui est alimentée dans le tiers supérieur en fraction brute liquide en C₄, avec formation d'une partie d'enrichissement et d'une partie d'épuisement et dont on soutire un flux de tête contenant les hydrocarbures en C₃, un flux de fond contenant les oligomères et les polymères en C₄ ainsi que les hydrocarbures en C₅₊ et, de la partie d'épuisement, la fraction brute, purifiée, sous forme vapeur, en C₄, comme flux latéral.

2. Procédé selon la revendication 1, **caractérisé en ce que** les hydrocarbures en C₃ dans la fraction brute, purifiée, sous forme vapeur, en C₄, sont épuisés jusqu'à moins de 10 ppm en poids par rapport au poids total de la fraction brute, purifiée, sous forme vapeur, en C₄.

3. Procédé selon la revendication 2, **caractérisé en ce que** les hydrocarbures en C₃ dans la fraction brute, purifiée, sous forme vapeur, en C₄, sont épuisés jusqu'à moins de 4 ppm en poids par rapport au poids total de la fraction brute, purifiée, sous forme vapeur, en C₄.

4. Procédé selon l'une quelconque des revendications 1 à 3, **caractérisé en ce que** les hydrocarbures en C₅₊ dans la fraction brute, purifiée, sous forme vapeur, en C₄ sont épuisés à moins de la moitié des hydrocarbures en C₅₊ contenus dans le flux d'alimentation.

5. Procédé selon l'une quelconque des revendications 1 à 4, **caractérisé en ce que** la colonne de distillation est exploitée à une pression de tête dans la plage de 4 à 10 bars absolus.

6. Procédé selon la revendication 5, **caractérisé en ce que** la colonne de distillation est exploitée à une pression de tête dans la plage de 6 à 7 bars absolus.

7. Procédé selon l'une quelconque des revendications 1 à 6, **caractérisé en ce que** la colonne de distillation est une colonne à plateaux.

8. Procédé selon la revendication 7, **caractérisé en ce que** la colonne à plateaux présente 30 à 100 plateaux pratiques.

9. Procédé selon la revendication 8, **caractérisé en ce que** la colonne de distillation présente 50 à 70 plateaux pratiques.
